Europäisches Patentamt

European Patent Office

Office européen des brevets

(19)

(11) **EP 1 328 782 B1**

(12) **FASCICULE DE BREVET EUROPEEN**

(45) Date de publication et mention
de la délivrance du brevet:
**14.07.2004 Bulletin 2004/29**

(51) Int Cl.⁷: **G01J 11/00**, G01N 21/17,
G01J 5/38

(21) Numéro de dépôt: **01980628.0**

(22) Date de dépôt: **22.10.2001**

(86) Numéro de dépôt international:
**PCT/FR2001/003279**

(87) Numéro de publication internationale:
**WO 2002/035196 (02.05.2002 Gazette 2002/18)**

(54) **DISPOSITIF DE MESURE EN LIGNE DE PULSATIONS D'UN LASER ET PROCEDE DE MESURE PAR SPECTROSCOPIE PHOTO-ACOUSTIQUE**

VERFAHREN UND VORRICHTUNG ZUR IN-LINE-MESSUNG VON LASERPULSEN UND
VERFAHREN ZUR MESSUNG MITTELS PHOTOAKUSTISCHER SPEKTROSKOPIE

DEVICE FOR INLINE MEASUREMENT OF LASER PULSES AND MEASURING METHOD BY
PHOTOACOUSTIC SPECTROSCOPY

(84) Etats contractants désignés:
**DE ES GB**

(30) Priorité: **23.10.2000 FR 0013545**

(43) Date de publication de la demande:
**23.07.2003 Bulletin 2003/30**

(73) Titulaire: **COMMISSARIAT A L'ENERGIE
ATOMIQUE
75752 Paris Cédex 15 (FR)**

(72) Inventeurs:
• **ROUDIL, Danièle
F-30330 Tresques (FR)**

• **COUSTON, Laurent
F-30133 Les Angles (FR)**
• **DELAGE, Jacques
F-84100 Orange (FR)**
• **BRUTEL, Mathieu
F-38100 Grenoble (FR)**

(74) Mandataire: **Poulin, Gérard
Société BREVATOME
3, rue du Docteur Lancereaux
75008 Paris (FR)**

(56) Documents cités:
RU-C- 2 031 378          US-A- 4 722 602
US-A- 5 048 969          US-A- 5 926 273

**Description**

Le sujet de cette invention est un dispositif de mesure en ligne de pulsations d'un laser, applicable notamment à un procédé de mesure par spectroscopie photo-acoustique qui constitue un autre aspect de celle-là.

La spectroscopie photo-acoustique consiste à envoyer des pulsations lumineuses à travers certaines solutions absorbantes, notamment de lanthanides, Actinides, Produits de fission (PF) (contenant des ions comme $Nd^{3+}$ ou $Pr^{3+}$) ou d'uranium. L'énergie optique produit un changement d'état des électrons des corps dissous dans le cas d'une désexcitation non radiative et l'émission d'une onde acoustique dans la solution, qu'un capteur permet de mesurer. Un avantage de ce procédé de spectroscopie est qu'il permet alors de détecter des concentrations très faibles de corps dissous présentant cette propriété de conversion d'énergie ; mais s'il peut être appliqué sans difficulté à des mesures qualitatives, on ne pouvait pas, avant l'invention, déduire avec une bonne précision la concentration du corps dans la solution de la mesure de l'onde acoustique produite : l'énergie de l'onde acoustique est proportionnelle à l'énergie optique en même temps qu'à la concentration du corps, ce qui rend donc nécessaire la connaissance de l'une comme de l'autre. On utilisait auparavant des sondes pyro-électriques ou photoélectrique pour estimer l'énergie des pulsations lumineuses du laser, mais on devait soumettre la sonde à une série de pulsations pour obtenir un résultat mesurable, d'où on tirait l'énergie d'une pulsation par un calcul de moyenne ; or les amplitudes des pulsations présentent des variations assez sensibles.

Une autre idée consisterait à utiliser des photodiodes, qui permettent de mesurer l'amplitude de chaque pulsation, mais qui ont une fonction de transfert variable avec la longueur d'onde, alors qu'on éprouve généralement le besoin de soumettre la solution à un balayage à des longueurs d'ondes différentes. Enfin, on doit souligner que seules les ondes lumineuses pulsées induisent une onde acoustique proportionnelle à la concentration de la solution. Ainsi la mesure d'énergie des pulsations laser, au tir à tir, permet une normalisation exacte du signal photo-acoustique généré dans la solution pour une application de la formule :

$$\frac{A(\lambda)}{E(\lambda)} = K\varepsilon(\lambda)C$$

où

$$\left\{ \begin{array}{l} A(\lambda) \; : \; \text{Amplitude du signal dans la solution,} \\[4pt] E(\lambda) \; : \; \text{Energie lumineuse incidente,} \\[4pt] \varepsilon(\lambda) \; : \; \text{Coefficient d'extinction molaire de l'espèce} \\[2pt] \qquad\qquad \text{absorbante en solution,} \\[4pt] C \; : \; \text{Concentration molaire de l'espèce en solution.} \end{array} \right.$$

Le document US-A-5 048 962 divulgue un appareil de mesure d'un laser pulsé a l'aide d'un capteur piézoélectrique comprenant une couche absorbante.

Un premier aspect de l'invention est ainsi un dispositif de mesure en ligne des énergies de pulsations d'un laser, qui permette une mesure indépendante de l'amplitude de chaque pulsation effectivement envoyée, et qui ne soit pas sensible à la longueur d'onde de la lumière ; ce dispositif consiste en un capteur piézoélectrique dépourvu de couche antérieure de protection et ayant une fréquence de résonance inférieure d'au moins cinquante fois à l'inverse de durée des pulsations. L'onde de pression produite dans le capteur piézoélectrique est alors proportionnelle à l'amplitude de la pulsation lumineuse incidente, et sans dépendre de sa longueur d'onde. Les inventeurs ont en effet constaté que les couches de protection, couramment utilisées devant des capteurs piézoélectriques dans d'autres applications pour les protéger de l'impact direct d'une onde, avaient aussi pour effet d'amortir la pulsation du laser et de l'écrêter, ce qui faisait produire une réponse incorrecte au capteur. Ils émettent l'hypothèse que cela découle de réflexions multiples de portions de la pulsation aux surfaces de la couche de protection. Ces réflexions dans la couche de protection absorbent une quantité inconnue de l'énergie des pulsations du laser, et qui dépend de sa longueur d'onde : il est donc indispensable que la matière du capteur piézoélectrique soit homogène pour permettre de mesurer des réponses quantitatives corrélées à une énergie incidente connue et pour procéder utilement à des balayages en fréquence souvent indispensables en spectroscopie moléculaire. De plus, la suppression de la couche de protection permet d'obtenir un signal électrique de réponse en sinusoïde amortie unique, sans échos tardifs qui perturberaient la synchronisation de la mesure. Le capteur de l'invention n'est éventuellement couvert que par une lame quart d'onde courante dans les capteurs du commerce, dont l'intérêt est d'adapter l'impédance acoustique entre le liquide de couplage et le capteur tout en diminuant les interférences acoustiques, sans que des atténuations ni des réflexions mesurables puissent y être produites à cause de sa minceur. Ce capteur peut être situé sur une portion de faisceau du laser qui est détournée d'un chemin principal par une lame séparatrice : comme c'est une portion connue et constante qui est prélevée, sur une gamme de longueur d'onde étendue mais bornée, la mesure par le capteur piézoélectrique permet de connaître la valeur du reste de la pulsation, qui est affectée à l'essai ou à la mesure et notamment à une mesure par spectroscopie photo-acoustique comme on l'a mentionné, qui peut comprendre un balayage de fréquence lumineuse.

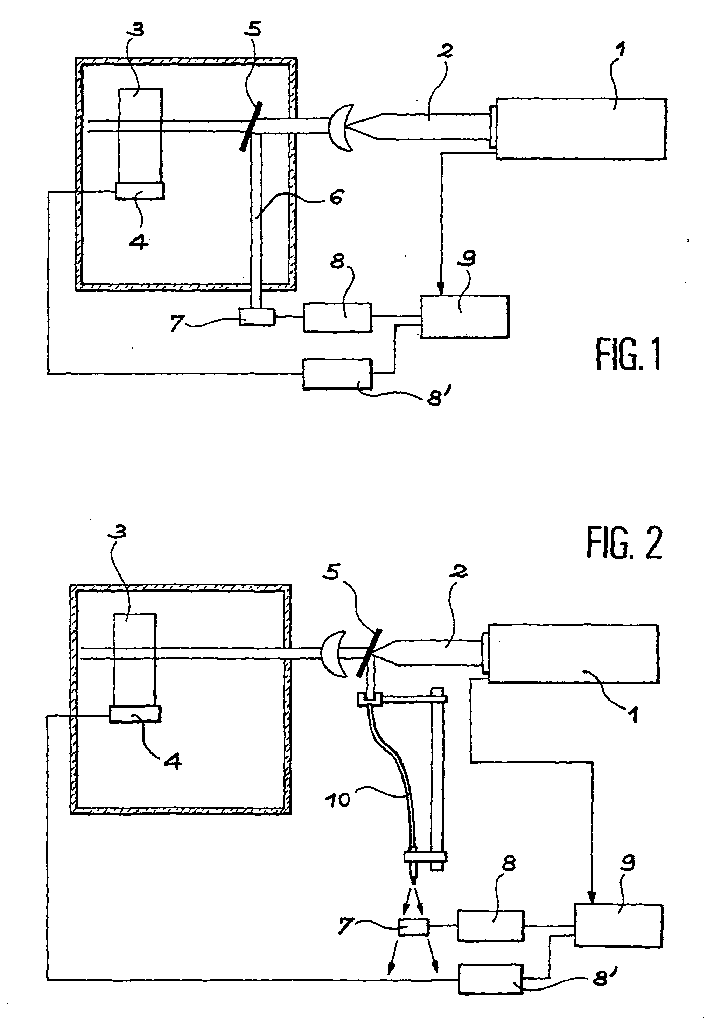

L'invention va maintenant être décrite en liaison aux figures 1 et 2, qui illustrent deux de ses réalisations possibles. A la figure 1, un laser pulsé émet périodiquement un faisceau 2 vers une cuve 3 contenant un échantillon liquide à analyser et dont le fond est occupé par un capteur acoustique 4 qui mesure les ondes acoustiques produites par la transformation du faisceau 2 optique dans la cuve 3 en présence de certains corps dissous. Une lame séparatrice 5 est toutefois traversée par le faisceau 2 avant qu'il n'arrive à la cuve 3, ce qui en prélève une portion 6 qui est détournée vers un capteur piézoélectrique 7 dont les mesures sont exploitées par un préamplificateur 8 et par un moyen de mesure 9. Le signal du capteur 4 est amplifié par un préamplificateur 8' analogue à 8. Le moyen de mesure 9 reçoit les deux mesures synchronisées par un signal reçu du laser 1, à chaque tir. La comparaison des mesures issues des détecteurs 4 et 7 permet au moyen de mesure 9 de normaliser le résultat de l'essai. Le matériau piézoélectrique du détecteur 7 est nu, c'est-à-dire dépourvu d'une couche supposée le protéger, pour les raisons qu'on a données plus haut, mais une lame quart d'onde, d'emploi courant, peut être utilisée sans effet néfaste sur la précision de la mesure. Des essais ont démontré que l'amplitude du courant produit par le capteur 7 par l'effet piézoélectrique était proportionnelle à l'amplitude de la portion 6 de la pulsation du faisceau 2, et de la pulsation elle-même. Comme le montre la figure 2, une fibre optique 10 peut être disposée sur le chemin de la portion 6, entre la lame 5 et le capteur 7, pour guider plus commodément la portion prélevée des pulsations.

Voici maintenant une description plus détaillée de l'appareillage : le laser 1 peut être un laser pulsé accordable à oscillateur paramétrique optique de 220 à 1800 nanomètres de longueur d'onde de lumière, le laser de pompage peut être un YAG, la fréquence de tir de 10 hertz et la durée des pulsations de 10 nanosecondes. La fibre optique 10 en silice par exemple peut avoir une longueur de 2 mètres pour un diamètre 550 micromètres, de façon à transmettre 99% de la lumière sur toutes les gammes de longueur d'onde balayées dans le visible. Le capteur piézoélectrique 7 peut être cylindrique d'un diamètre de 10 millimètres, de fréquence nominale égale à 250 kilohertz, c'est-à-dire à périodes de 4 microsecondes. Plus précisément, il convient que le rapport entre la période de vibration du capteur piézoélectrique 7 et la durée d'impulsion du laser 1 soit d'au moins cinquante. Ce système a été mis en oeuvre pour le tracé de spectres photoacoustiques sur des solutions contenant par exemple de lanthanides d'uranium IV. Des essais importants ont été effectués aux longueurs d'onde de 450, 526, 650 et 800 nanomètres de lumière et corrélés avec des mesures sur des sondes pyroélectriques étalonnées ; ils ont prouvé la linéarité de réponse du capteur piézoélectrique 7 en même temps que son indépendance des longueurs d'onde. Les énergies totales des pulsations émises vers le capteur piézoélectrique 7 étaient de 0,15 millijoules, et produisaient des amplitudes de quelques centaines de millivolts dans une gamme de mesure par le dispositif 9 pouvant aller jusqu'à 1 volt environ, ce qui permet de s'attendre à une validité de la mesure jusqu'à des énergies de l'ordre du millijoule.

On s'attend à l'extension de cette méthode dans les mesures des radioélements sur le combustible nucléaire.


**Revendications**

1.  Dispositif de mesure en ligne de pulsations (2) d'un laser (1), comprenant le laser (1) à étudier, **caractérisé en ce qu'**il comprend en outre un capteur piézo-électrique (7) dépourvu de couche de protection et ayant une fréquence de résonance inférieure d'au moins cinquante fois à l'inverse de durée des pulsations.

2.  Dispositif de mesure en ligne de pulsations d'un laser (1) selon la revendication 1, comprenant une lame séparatrice (5), où le capteur (7) est situé sur une portion (6) de faisceau du laser (1) qui est détournée d'un chemin principal par la lame séparatrice (5).

3.  Dispositif de mesure en ligne de pulsation d'un laser (1) selon la revendication 2, comprenant un capteur additionel (4), où le capteur piézo-électrique (7) et le dit capteur (4), qui enregistre une mesure principale faite au moyen d'une portion du faisceau complémentaire à la portion détournée, sont reliés à un même moyen de mesure (9).

4.  Procédé de mesure par spectroscopie photo-acoustique, où des irradiations d'un milieu (3) par des pulsations d'un laser (1) sont faites, **caractérisé en ce que** chacune des pulsations a son amplitude mesurée par un dispositif selon la revendication 3.

**5.** Procédé de mesure par spectroscopie photo-acoustique selon la revendication 4, **caractérisé en ce que** les irradiations sont faites avec un balayage de fréquence lumineuse.

**Patentansprüche**

**1.** Vorrichtung zur In-line-Messung von Pulsen (2) eines Lasers (1), den zu untersuchenden Laser (1) umfassend, **dadurch gekennzeichnet, dass** sie außerdem einen piezoelektrischen Sensor (7) ohne Schutzschicht und mit einer Resonanzfrequenz umfasst, die wenigstens fünfzigmal kleiner ist als der Kehrwert der Pulsdauer.

**2.** Vorrichtung zur In-line-Messung von Pulsen eines Lasers (1) nach Anspruch 1, eine Teilerplatte (5) umfassend, wobei der Sensor (7) sich in einem Teil (6) des Strahls des Lasers (1) befindet, der durch die Teilerplatte (5) von einem Hauptweg abgelenkt wird.

**3.** Vorrichtung zur In-line-Messung von Pulsen eines Lasers (1) nach Anspruch 2, einen zusätzlichen Sensor (4) umfassend, wobei der piezoelektrische Sensor (7) und der genannte Sensor (4), der eine mittels eines Teils des zu dem abgelenkten Teil komplementären Strahls gemachte Hauptmessung aufzeichnet, mit einer selben Messeinrichtung (9) verbunden sind.

**4.** Verfahren zur Messung mittels fotoakustischer Spektroskopie, bei dem ein Medium (3) mit Pulsen eines Lasers (1) bestrahlt wird, **dadurch gekennzeichnet, dass** die Amplitude jedes Pulses durch eine Vorrichtung nach Anspruch (3) gemessen wird.

**5.** Verfahren zur Messung mittels fotoakustischer Spektroskopie nach Anspruch 4, **dadurch gekennzeichnet, dass** die Bestrahlungen durch eine Abtastung mit Lichtfrequenz erfolgt.

**Claims**

**1.** Device for online measurement of pulses (2) of a laser (1) comprising the laser (1) to be studied, **characterized in that** it also comprises a piezoelectric sensor (7) not provided with a protection layer and with a resonant frequency at least fifty times lower than the inverse of the duration of the pulses.

**2.** Device for online measurement of pulses of a laser (1) comprising a separating blade (5) according to claim 1, where the sensor (7) is located on a portion (6) of the beam of laser (1) that is diverted from a main path by the separating blade (5).

**3.** Device for online measurement of pulses of a laser comprising an additional sensor (4) according to claim 2, where the piezoelectric sensor (7) and said sensor (4), that records a main measurement made using a portion of the beam complementary to the diverted portion, are connected to a single measurement means (9).

**4.** Process for photo-acoustic spectroscopy measurement, in which a medium (3) is irradiated by the pulses of a laser (1), **characterized in that** the amplitude of each of the pulses is measured by the device according to claim 3.

**5.** Process for photo-acoustic spectroscopy measurement according to claim 4, **characterized in that** radiation is made with light frequency scanning.

EP 1 328 782 B1

FIG. 1

FIG. 2